# EUROPÄISCHE PATENTSCHRIFT

(11) **EP 1 585 379 B1**
(45) Veröffentlichungstag und Bekanntmachung des Hinweises auf die Patenterteilung: **27.09.2006**
(21) Anmeldenummer: 03767785.3
(22) Anmeldetag: 11.12.2003
(51) Int. Cl.: A01C 7/04

(54) **DOSIERSYSTEM**
DOSING SYSTEM
SYSTEME DE DOSAGE

(30) Priorität: 10.01.2003 US 339916
(43) Veröffentlichungstag der Anmeldung: 19.10.2005
(73) Patentinhaber: DEERE & COMPANY, Moline, Illinois 61265-8098 (US)
(72) Erfinder: THIEMKE, Daniel, Bruce, Rock Island, IL 61201 (US); VALDEZ, Jose, Miguel, Montpelier, IA 52759 (US); RYLANDER, David, James, Victoria, IL 61485 (US); VANDERSNICK, Todd, Edward, Geneseo, IL 61254 (US); KEATON, Miles, Raymond, Rock Island, IL 61201 (US); PENFOLD, Garn, Farley, East Moline, IL 61244 (US)
(74) Vertreter: Holst, Sönke
(86) Internationale Anmeldenummer: PCT/EP2003/014036
(87) Internationale Veröffentlichungsnummer: WO 2004/062344

(56) Entgegenhaltungen:
- FR-A- 1 410 390
- GB-A- 2 057 835
- US-A- 4 449 642

## Beschreibung

Die Erfindung betrifft ein Dosiersystem für eine Sämaschine, mit einer Saatgutscheibe, welche mehrere voneinander beabstandete Saatgutzellen und einen Umfangsrand aufweist.

Landwirtschaftliche Sämaschinen, wie z. B. eine Reihensämaschine oder eine Korndrillmaschine, bringen Saatgut in einer gewünschten Tiefe in mehrere in einem Ackerboden ausgebildete Saatfurchen aus. Im Falle einer Reihensämaschine werden mehrere Reihensäeinheiten normalerweise durch Bodenkontakt unter Verwendung von Rädern, Antriebswellen, Zahnrädern, Verteilergetrieben, Ketten oder dergleichen angetrieben. Jede Reihensäeinheit umfasst einen Rahmen, welcher beweglich mit einem Werkzeughalter verbunden ist. Der Rahmen kann einen Hauptbehälter für Saatgut, einen Behälter für Herbizide und einen Behälter für Insektizide tragen. Wenn granulare Herbizide und Insektizide eingesetzt werden, können die mit einem Ausbringen des Granulats in die Saatfurchen verbundenen Dosiermechanismen relativ einfach ausgebildet sein. Andererseits sind die zur genauen Dosierung des Saatguts erforderlichen Mechanismen, welche das Saatgut in vorgegebener Menge ausbringen und an relativ zur Saatfurche vorgegebenen Positionen platzieren, relativ kompliziert ausgebildet.

Die mit der Dosierung und Ausbringung des Saatguts verbundenen Mechanismen können im Wesentlichen in ein Dosiersystem für Saatgut und in ein Ausbringsystem für Saatgut unterteilt werden, welche miteinander in Verbindung stehen. Das Dosiersystem nimmt das Saatgut aus dem von dem Rahmen getragenen Saatgutbehälter in Form von Massengut auf. Es können verschiedene Arten von Dosiersystemen eingesetzt werden, wie z. B. Säplatten, Fingerplatten und Säscheiben. Im Falle eines Säscheiben-Dosiersystems ist eine Säscheibe mit mehreren auf dem Umfang der Säscheibe beabstandeten Saatgutzellen ausgebildet. Das Saatgut wird in die Saatgutzellen befördert, wobei je nach Größe und Ausbildung der Saatgutzellen ein oder mehrere Saatkörner in jede Saatgutzelle befördert werden. Ein Vakuum oder Druckluftstrom kann in Verbindung mit der Säscheibe eingesetzt werden, um das Befördern des Saatguts in die Saatgutzellen zu unterstützen. Die Saatkörner werden dosiert (z. B. getrennt) und in einer vorgegebenen Rate an das Ausbringsystem für Saatgut abgegeben. Ein solches Dosiersystem ist z.B. aus FR-A-1 410 390 bekannt.

Das Ausbringsystem für Saatgut kann als ein schwerkraftgesteuertes und als ein antriebsunterstütztes Ausbringsystem eingestuft werden. Im Falle eines schwerkraftgesteuerten Ausbringsystems ist ein Saatgutleiter vorgesehen, der eine Einlassöffnung aufweist, welche unter dem Dosiersystem für Saatgut angeordnet ist. Die getrennten Saatkörner aus dem Dosiersystem fallen lediglich in den Saatgutleiter und mittels Schwerkraft aus einer Austrittsöffnung des Saatgutleiters direkt in die Saatfurche.

Ein Ausbringsystem für Saatgut der antriebsunterstützten Art kann im Wesentlichen in ein förderbandgesteuertes, drehschiebergesteuertes, kettentriebgesteuertes oder druckluftgesteuertes Ausbringsystem klassifiziert werden. Diese Arten von Ausbringsystemen für Saatgut ermöglichen eine gleichmäßigere Ausbringung des Saatguts in gewünschten Abständen entlang eines vorgegebenen Pfades. Für detailliertere Beschreibungen derartiger Ausbringsysteme für Saatgut, sowie für landwirtschaftliche Saatausbringung generell, wird hiermit auf die Ausführungen in "PLANTING FUNDAMENTALS OF MACHINE OPERATION"; Breece, Edward H., PhD, et al.; Deere & Co.; 1981 verwiesen.

Bei einem Dosiersystem, welches eine oben beschriebene Säscheibe aufweist, ist die Säscheibe normalerweise mit einer konzentrischen Antriebsachse versehen, welche an einem außenliegenden Ende ein über Bodenantrieb oder dergleichen angetriebenes Zahnrad aufweist. Die konzentrisch angeordnete Antriebsachse und das Zahnrad können die Kompaktheit des Dosiersystem begrenzen (z. B. Reduzierung der Gesamtgröße).

Die der Erfindung zu Grunde liegende Aufgabe wird darin gesehen, ein Dosiersystem vorzuschlagen, welches einen sicheren Antrieb für eine Säscheibe bei verbesserter Kompaktheit aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Dosiersystem der Eingangs genannten Art mit einem Seitenantrieb versehen, der in den Umfangsrand eingreift, um die Saatgutscheibe rotierend anzutreiben.

In einer besonderen Ausgestaltung der Erfindung enthält das Dosiersystem eine Saatgutscheibe, welche mehrere voneinander beabstandete Saatgutzellen und den Umfangsrand aufweist. Der Seitenantrieb greift in den Umfangsrand ein, um die Saatgutscheibe rotierend anzutreiben.

In einer bevorzugten Ausgestaltung der Erfindung ist in einer Sämaschine wenigstens ein erfindungsgemäßes Dosiersystem enthalten, wobei die Sämaschine des Weiteren wenigstens ein Ausbringsystem für Saatgut enthält. Jedes Ausbringsystem für Saatgut steht in Verbindung mit einem entsprechenden Dosiersystem.

Ein Vorteil der Erfindung besteht darin, dass die Saatgutscheibe derart angetrieben wird, dass die Saatgutscheibe auf eine kompaktere Weise zwischen die Scheiben eines zweischeibigen Furchenöffners platzierbar ist.

Ein weiterer Vorteil besteht darin, dass der Umfangsrand der Saatgutscheibe auf verschiedene Arten angetrieben werden kann, beispielsweise mit einem Zahnradantrieb oder mit einem Reibantrieb.

Noch ein weiterer Vorteil besteht darin, dass die relative Position des Seitenantriebs (beispielsweise oberhalb oder hinter der Sattgutscheibe) je nach Anwendungsfall variierbar ist.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht einer erfindungsgemäßen Sämaschine mit einer Reihensäeinheit,
- Fig. 2: eine teilweise aufgebrochene Seitenansicht der Reihensäeinheit aus Figur 1, wobei innenliegende Komponenten eines Dosier- und Ausbringsystems für Saatgut dargestellt sind,
- Fig. 3: eine perspektivische Ansicht des Dosier- und Ausbringsystems aus Figur 2 mit einer abgelösten Seitenwand zur Darstellung eines Förderrades und einer Saatgutführung und
- Fig. 4: eine Seitenansicht des Dosiersystems für Saatgut aus Figur 2 und Figur 3 bei demontiertem Vakuumgehäuse.

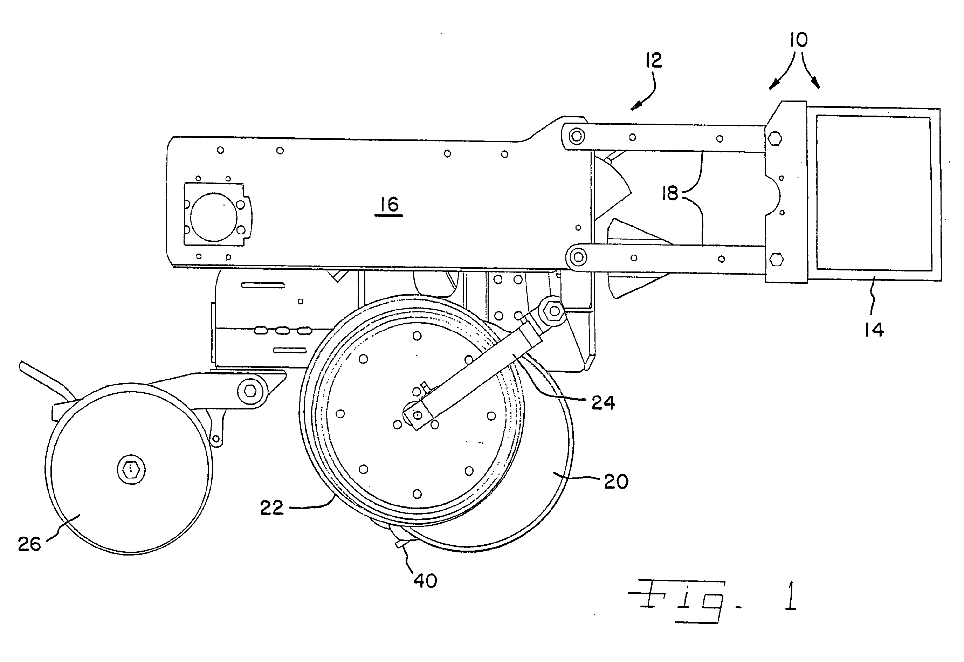

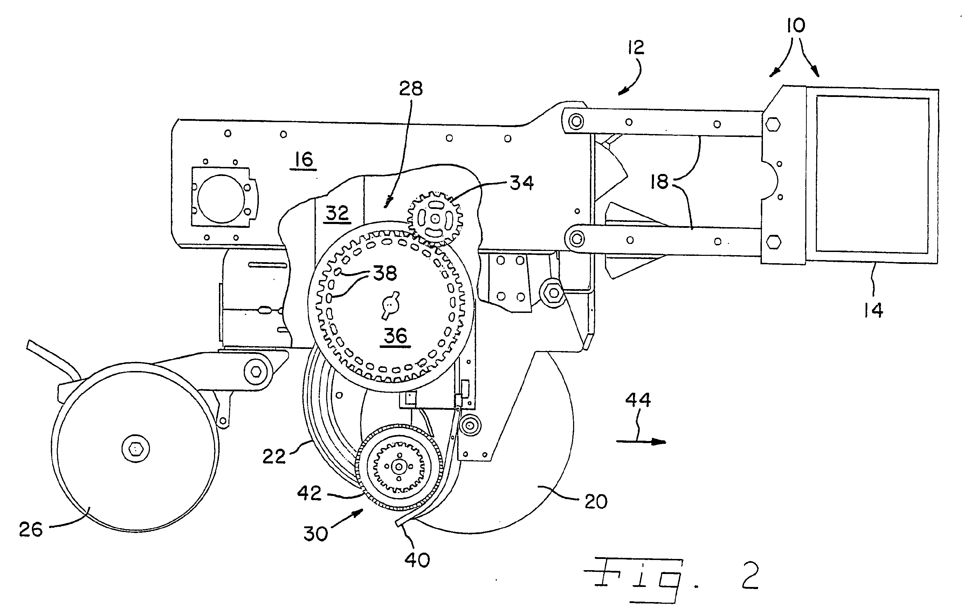

In den Figuren 1 und 2 ist eine erfindungsgemäße Sämaschine 10 dargestellt. Die Sämaschine 10 ist als Reihensämaschine ausgebildet, sie könnte aber auch als Korndrillmaschine etc. ausgebildet sein. Die Figuren 1 und 2 zeigen eine einzelne Reihensäeinheit 12 einer Reihensämaschine mit mehreren Reihensäeinheiten, wobei jede Reihensäeinheit 12 im Wesentlichen identisch ausgebildet und mit einem herkömmlichen Werkzeugträger 14 verbunden ist. Der Einfachheit halber ist nur eine einzelne Reihensäeinheit 12 dargestellt.

Die Reihensäeinheit 12 weist einen mehrteiligen Rahmen 16 auf, welcher durch ein Parallelgestänge 18 an den Werkzeugträger 14 befestigt ist. Der Werkzeugträger 14 ist mit einer Antriebseinheit (nicht gezeigt) verbunden, beispielsweise einem landwirtschaftlichen Traktor. Beispielsweise kann der Werkzeugträger 14 über eine Dreipunkt-Anhängevorrichtung an den landwirtschaftlichen Traktor gekoppelt sein. Der Werkzeugträger 14 kann mit Transporträdern, Markierungsarmen etc. von konventioneller Gestalt, welche der Einfachheit halber nicht dargestellt sind, gekoppelt sein. Die Transporträder sorgen auf bekannte Art und Weise für einen bodengetriebenen Antrieb der Reihensämaschine 12 unter Verwendung von Wellen, Ketten, Zahnrädern, Verteilergetrieben etc.

Der Rahmen 16 trägt einen zweischeibigen Furchenöffner 20, zur Ausbildung einer Saatfurche in einem Ackerboden. Dem Scheibenpaar des zweischeibigen Furchenöffners 20 ist ein entsprechendes Tiefeneinstell-/Schließradpaar 22 zugeordnet. Insbesondere ist jedes Tiefeneinstell-/Schließrad 22 im Wesentlichen in Reihe und unmittelbar neben der Außenseite einer entsprechenden Scheibe des zweischeibigen Furchenöffners 22 angeordnet. Die Tiefeneinstell-/Schließräder 22 sind durch entsprechende Arme 24 schwenkbar mit dem Rahmen 16 verbunden. Jedes Tiefeneinstell-/Schließrad 22 kann vertikal einstellbar angeordnet sein, um die Tiefe einer mit dem zweischeibigen Furchenöffner 20 in den Ackerboden geschnittene Furche einzustellen.

Ein Paar Schließräder 26 wird ebenfalls von dem Rahmen 16 getragen. Die Schließräder 26 sind im Wesentlichen zum zweischeibigen Furchenöffner 20 fluchtend angeordnet.

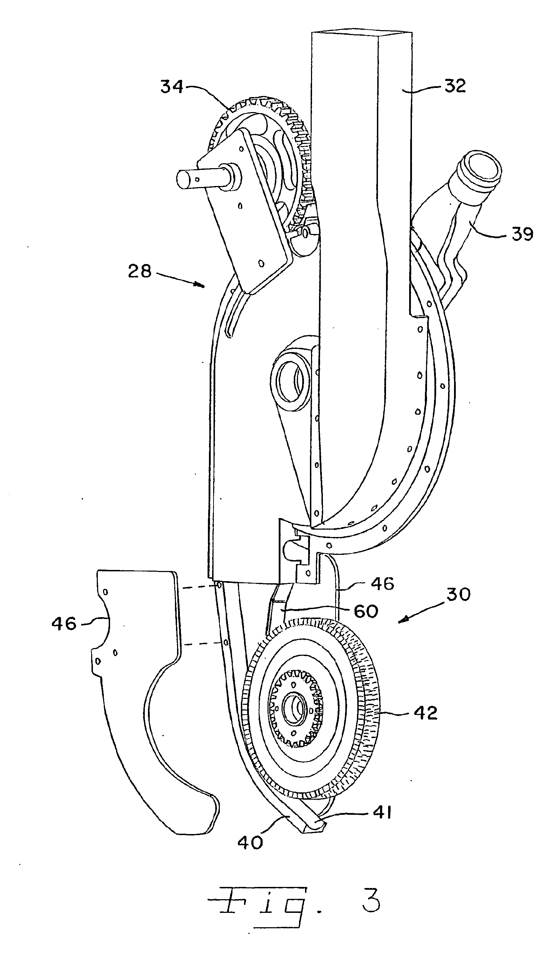

Wie in den Figuren 2 und 3 dargestellt ist, trägt jede Reihensäeinheit 12 der Sämaschine 10 ein Dosiersystem 28 und ein Ausbringsystem 30 für Saatgut. Das Dosiersystem 28 weist eine Einlassrinne 32 auf, welche Saatgut aus einer Saatguthauptversorgung, wie z. B. einem über dem Rahmen 16 getragenen Saatgutbehälter aufnimmt. Alternativ kann das Saatgut auch in einem entfernt gelegenen Saatguthauptbehälter enthalten sein und über Druckluft oder dergleichen der Einlassrinne 32 zugeführt werden.

Das Dosiersystem 28 weist des Weiteren ein Antriebsrad 34 auf, welches eine Saatgutscheibe 36 antreibt, die mit mehreren über den Umfang intermittierend beabstandeten Saatgutzellen 38 versehen ist. Ein Verbindungsstück 39 (siehe Figur 3) ist fließend mit einer Vakuumeinrichtung (nicht gezeigt) verbunden, welche ein Unterdruck in den in der Saatgutscheibe 36 ausgebildeten Saatgutzellen 38 erzeugt. Dieser Unterdruck erzeugt ein Eindringen von Saatgut in die Saatgutzellen 38 und hält das Saatgut in den Saatgutzellen 38 an seinem Platz. Das Saatgut wird von den Saatgutzellen 38 zu dem Ausbringsystem 30 gebracht.

Das Ausbringsystem 30 weist eine Saatgutführung 40 auf, welches Saatgut in einer vorbestimmten Menge in die durch den zweischeibigen Furchenöffner 20 ausgebildete Saatfurche führt. Die Saatgutführung 40 weist in Querrichtung zur Saatfurche eine Breite auf, die geringer als die Breite der Saatfurche ist.

Ein Förderrad 42, welches ein Geschwindigkeitsregulator für Saatgut darstellt, weist einen Umfangsbereich auf, welcher an der oder nahe benachbart zur Saatgutführung 40 positioniert ist (z. B. 0 - 5 mm, vorzugsweise 1 mm). Das Förderrad 42 erfasst das von dem Ausbringsystem 30 in einer voreingestellten Rate aufgenommene Saatgut und reguliert die Geschwindigkeit des Saatguts auf eine Geschwindigkeit, die im Wesentlichen der Fahrgeschwindigkeit in Fahrtrichtung 44 der Sämaschine 10 entspricht. Das Förderrad 42 und die Saatgutführung 40 arbeiten zusammen, um das Saatgut in einer gewünschten Flugbahn und einer gewünschten Geschwindigkeit auszubringen.

Auf beiden Seiten des Förderrads 42 sind Seitenwände 46 positioniert, die an die Saatgutführung 40 befestigt sind. Die Seitenwände 46 und die Saatgutführung 40 definieren gemeinsam ein Gehäuse, welches teilweise das Förderrad 42 umgibt.

Die Saatgutführung 40 ist mit einer Führungsrinne 41 versehen, welche das Saatgut zentriert auf der Saatgutführung 40 hält, wenn es von dem Förderrad 42 befördert wird und verbessert des Weiteren die Flugkurve mit der das Saatgut in die im Ackerboden ausgebildete Saatfurche ausgebracht wird.

Ein Leitelement 60 erstreckt sich vom Boden des Dosiersystems 28 zum Ausbringsystem 30. Das Leitelement 60 leitet das Saatgut in den zwischen Förderad 42 und Saatgutführung 42 ausgebildeten Aufnahmespalt. In dem dargestellten Ausführungsbeispiel ist das Leitelement 60 in Form einer Platte ausgebildet, welche eine Breite aufweist, die der Breite des Förderrads 42 entspricht. Das Leitelement 60 kann jedoch auch anders ausgebildet sein.

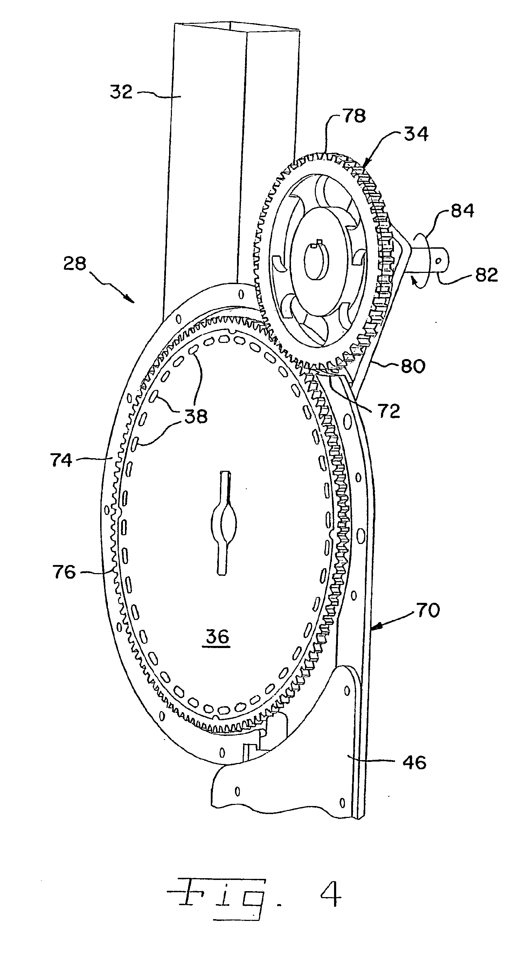

Mit Bezug auf Figur 4 wird das Dosiersystem 28 im Folgenden detaillierter beschrieben. Das Dosiersystem 28 weist ein Gehäuse 70 auf, in dem die Einlassrinne 32 ausgebildet ist. In dem Gehäuse 70 ist die Saatgutscheibe 36 rotierbar gelagert, wobei das Gehäuse 70 eine Öffnung 72 aufweist, durch welche sich das Antriebsrad 34 erstreckt, um mit der Saatgutscheibe 36 in Eingriff zu treten. Das Gehäuse 70 umfasst ein Vakuumgehäuse (nicht gezeigt), welches an einen Flansch 74 angepasst ist und ein Verbindungsstück 39 (Figur 3) definiert, welches an die Vakuumquelle angeschlossen ist.

Die Saatgutscheibe 36 weist einen Umfangsrand 76 auf, der mit mehreren darin ausgebildeten Stirnradzähnen versehen ist. Alternativ kann der Umfangsrand 76 auch mit Kegelradzähnen versehen oder als glatter Rand ausgebildet sein.

Das Antriebsrad 34 stellt einen Seitenantrieb dar, welcher in den Umfangsrand 76 der Saatgutscheibe 36 eingreift, um die Saatgutscheibe 36 rotierend anzutreiben. In dem gezeigten Ausführungsbeispiel weist das Antriebsrad 34 die Form eines Zahnrads auf, welches mehrere auf dem Umfang verteilte Stirnradzähne 78 enthält, die mit den auf dem Umfang der Saatgutscheibe 36 ausgebildeten Stirnradzähnen verzahnen. Die Stirnradzähne 78 können auch je nach Anwendung als Kegelradzähne etc. ausgebildet sein. An einem Haltearm 80, welcher an dem Gehäuse 70 befestigt oder mit dem Gehäuse ausgeformt ist, ist eine Antriebswelle 82 rotierbar gelagert, welche von einer konzentrisch angeordneten Öffnung am Antriebsrad 34 aufgenommen wird. Die Antriebswelle 82 und/oder das Antriebsrad 34 kann je nach Ausgestaltung ebenfalls in einem Winkel zur Saatgutscheibe 36 angeordnet sein. Die Antriebswelle 82 kann je nach Anwendung mechanisch, hydraulisch, elektrisch oder pneumatisch angetrieben werden, wie durch den Rotationspfeil 84 angedeutet wird. Die Umdrehungszahl, mit der die Antriebswelle angetrieben wird, als auch der Außendurchmesser des Antriebsrads 34 kann ebenfalls in Abhängigkeit von den gewünschten Betriebsparametern, wie z. B. der Ausbringrate an Saatgut, variieren.

Bei einer konventionellen Saatgutscheibe ist die Antriebswelle üblicherweise konzentrisch zur Längsachse angeordnet, wobei sich ein außen liegender Endbereich durch das Gehäuse des Dosiersystems erstreckt, und wird durch einen geeigneten Antriebsmechanismus angetrieben. Wie aus der vorhergehenden Beschreibung hervorgeht, wird die Saatgutscheibe 36 stattdessen erfindungsgemäß an dem Umfangsbereich der Saatgutscheibe 36 angetrieben. Das erlaubt, dass das Antriebsrad 34 in einem Bereich außerhalb des Furchenöffners 20 platziert werden kann, so dass das Dosiersystem 28 in einem Bereich zwischen den zwei Scheiben des Furchenöffners 20 eingebaut werden kann. Dies wiederum erlaubt es, die Reihensäeinheit 12 in ihrer Gesamtgröße zu reduzieren. In dem gezeigten Ausführungsbeispiel ist das Antriebsrad 34 benachbart zu einem oberen Bereich der Saatgutscheibe 36 positioniert und erstreckt sich durch eine entsprechende Öffnung 72, welche in dem Gehäuse 70 ausgebildet ist. Es ist ebenfalls möglich, dass das Antriebsrad 34 an einer anderen Stelle positioniert ist, welche es erlaubt, die Gesamtabmaße der Sämaschine 10 durch Platzierung des Antriebsrads 34 an der anderen Stelle (z. B. an einer rückwärtigen Position) relativ zur Saatgutscheibe 36 zu positionieren. Außerdem wird in dem Ausführungsbeispiel gezeigt, dass das Antriebsrad 34 die Saatgutscheibe 36 mittels einer Stirnradverzahnung rotierend antreibt. Dennoch ist es auch möglich das Antriebsrad 34 mit der Saatgutscheibe 36 auf eine andere Weise in Eingriff zu bringen, sofern der Umfangsrand 76 der Saatgutscheibe 36 angetrieben wird. Beispielsweise kann das Antriebsrad 34 mit einem Umfangsbereich ausgebildet sein, der dem einer V-förmigen Riemenscheibe ähnelt. Ein Material mit hoher Reibung, wie z. B. ein Gummi-Einsatz oder Ähnliches kann in die V-förmige Nut eingebettet werden, um die Saatgutscheibe 36 anzutreiben. Alternativ können das Antriebsrad 34 und das Saatgutrad 36 im Wesentlichen orthogonal zueinander ausgerichtete Achsen aufweisen, die mittels einer Kegelradverzahnung oder dergleichen in Eingriff stehen. Andere Ausbildungen sind ebenfalls möglich.

Des Weiteren umfasst der hier benutzte Ausdruck "Seitenantrieb" jeden Antrieb, der im Wesentlichen die Saatgutscheibe 36 am oder in der Nähe des äußeren Randes der Saatgutscheibe 36 antreibt. Z. B. ist es auch möglich, die Saatgutscheibe 36 am äußeren Rand mit einem Kranz auszubilden, welcher mehrere nach innen gerichtete Zähne aufweist, die einen Zahnkranz definieren. Das Antriebsrad 34 wird dann derart positioniert, dass die Zähne 78 mit den nach innen gerichteten Zähnen auf dem Zahnkranz der Saatgutscheibe 36 eingreifen. Andere Ausbildungen sind ebenfalls möglich.

Während des Betriebs wird ein ausgewähltes Saatgut aus einer Hauptversorgungsstelle für Saatgut von der Einlassrinne 32 des Dosiersystems 28 aufgenommen. Das Saatgut wird gegen eine Seite der Saatgutscheibe 36 gehalten, wobei die Saatgutscheibe 36 durch das Antriebsrad 34 mit einer vorgegebenen Drehzahl unter Verwendung von einem mechanischen Antrieb, hydraulischen Motor, Elektromotor oder einem anderen geeigneten Antrieb angetrieben wird. Das Saatgut wird in Saatgutzellen 38 in der Saatgutscheibe 36 aufgenommen. Um das Befördern des Saatguts in die Saatgutzellen 38 zu unterstützen wird die gegenüberliegende Seite der Saatgutscheibe 36 unter Verwendung von einer geeigneten Vakuumquelle mit einem Unterdruck beaufschlagt. Selbstverständlich kann auch ein Überdruck auf der Seite der Saatgutscheibe angewendet werden, auf der das Saatgut eingebracht wird. Das Saatgut wird von dem Dosiersystem 28 mit einer vorgegebenen Rate abgegeben. Das Leitelement 60 unterstützt das Einführen des Saatguts in den Aufnahmespalt, welcher zwischen Förderrad 42 und Saatgutführung 40 ausgebildet ist. Ein Zwischenraum von näherungsweise 1 mm zwischen dem Umfangsbereich des Förderrads 42 und der Saatgutführung 40 stellt sicher, dass das Saatgut von dem Förderrad 42 aufgegriffen wird, ohne dabei zu viel Kraft auf das Saatgut auszuüben. Die Führungsrinne 41 hält das Saatgut entlang der Längsachse der Saatgutführung 40. Das Saatgut wird reguliert, um in etwa die Vorwärtsfahrgeschwindigkeit der Sämaschine 10 zu erreichen und wird von der Führungsrinne 41 in die in dem Ackerboden ausgebildete Saatfurche abgelegt. Tiefeneinstell-/Schließräder 22 und Schließräder 26 schließen die Saatfurche und bedecken dadurch das in der Saatfurche befindliche Saatgut.

## Patentansprüche

1. Dosiersystem für eine Sämaschine, mit einer Saatgutscheibe (36), welche mehrere voneinander beabstandete Saatgutzellen (38) und einen Umfangsrand (76) aufweist, **dadurch gekennzeichnet, dass** ein Seitenantrieb enthalten ist, der in den Umfangsrand (76) eingreift, um die Saatgutscheibe (36) rotierend anzutreiben.

2. Dosiersystem nach Anspruch 1, **dadurch gekennzeichnet, dass** die Saatgutscheibe (36) mehrere auf dem Umfangsrand (76) angeordnete Zähne und der Seitenantrieb ein Antriebsrad (34) mit mehreren Zähnen (78) aufweist, wobei die Zähne (78) des Zahnrads und die Zähne der Saatgutscheibe (36) ineinander eingreifen.

3. Dosiersystem nach Anspruch 2, **dadurch gekennzeichnet, dass** die Zähne der Saatgutscheibe (36) und die Zähne (78) des Seitenantriebs Stirnradzähne sind.

4. Dosiersystem nach einem der Ansprüche 2 oder 3, **dadurch gekennzeichnet, dass** der Seitenantrieb eine Antriebswelle (82) aufweist, welche konzentrisch zum Antriebsrad des Seitenantriebs positioniert ist.

5. Dosiersystem nach Anspruch 4, **dadurch gekennzeichnet, dass** die Antriebswelle (82) mechanisch oder hydraulisch oder pneumatisch oder elektrisch antreibbar ist.

6. Dosiersystem nach einem der Ansprüche 1 bis 5, **dadurch gekennzeichnet, dass** der Seitenantrieb einen Zahnradantrieb oder einen Reibantrieb umfasst.

7. Dosiersystem nach einem der Ansprüche 1 bis 6, **dadurch gekennzeichnet, dass** der Seitenantrieb in einem oberen Bereich der Saatgutscheibe (36) positioniert ist.

8. Dosiersystem nach einem der Ansprüche 1 bis 7, **dadurch gekennzeichnet, dass** ein Gehäuse (70) enthalten ist, welches eine Öffnung (72) aufweist, durch welche sich der Seitenantrieb erstreckt, um mit dem Umfangsrand (76) der Saatgutscheibe (36) in Eingriff zu treten.

9. Sämaschine, mit wenigstens einem Dosiersystem (28) und wenigstens einem Ausbringsystem (30) für Saatgut, wobei das wenigstens eine Ausbringsystem (30) mit einem entsprechenden Dosiersystem (28) in Verbindung steht, **dadurch gekennzeichnet, dass** das Dosiersystem nach einem der Ansprüche 1 bis 8 ausgebildet ist.

10. Sämaschine nach Anspruch 9, **dadurch gekennzeichnet, dass** die Sämaschine (10) mehrere Reihensäeinheiten (12) aufweist, wobei jede Reihensäeinheit (12) mit dem wenigstens einen Dosiersystem (28) und dem wenigstens einen Ausbringsystem (30) für Saatgut ausgebildet ist.

## Claims

1. A metering system for a seeder, with a seed disc (36) which has a plurality of seed cells (38) spaced from one another and a circumferential edge (76), **characterized in that** a side drive is included, which engages in the circumferential edge (76) in order to drive the seed disc (36) in rotation.

2. A metering system according to claim 1, **characterized in that** the seed disc (36) has a plurality of teeth arranged on the circumferential edge (76) and the side drive comprises a drive wheel (34) with a plurality of teeth (78), wherein the teeth (78) of the gearwheel and the teeth of the seed disc (36) mesh with one another.

3. A metering system according to claim 2, **characterized in that** the teeth of the seed disc (36) and the teeth (78) of the side drive are spur gear teeth.

4. A metering system according to claim 2 or 3, **characterized in that** the side drive comprises a drive shaft (82) which is positioned concentrically with the drive wheel of the side drive.

5. A metering system according to claim 4, **characterized in that** the drive shaft (82) can be driven mechanically or hydraulically or pneumatically or electrically.

6. A metering system according to any of claims 1 to 5, **characterized in that** the side drive comprises a gearwheel drive or a friction drive.

7. A metering system according to any of claims 1 to 6, **characterized in that** the side drive is positioned in an upper region of the seed disc (36).

8. A metering system according to any of claims 1 to 7, **characterized in that** a housing (70) is included, having an opening (72) through which the side drive extends, in order to come into engagement with the circumferential edge (76) of the seed disc (36).

9. A seeder with at least one metering system (28) and at least one feed system (30) for seeds, wherein the at least one feed system (30) is in communication with a corresponding metering system (28), **characterized in that** the metering system is formed in accordance with any of claims 1 to 8.

10. A seeder according to claim 9, **characterized in that** the seeder (10) has a plurality of row seeding units (12), wherein each row seeding unit (12) is formed with the at least one metering system (28) and the at least one feed system (30) for seeds.

## Revendications

1. Système de dosage pour un semoir, comportant un disque semeur (36), qui comporte une pluralité de cellules de semences (38), écartées les unes des autres, et un bord périphérique (76), **caractérisé en ce qu'**un système d'entraînement latéral est inclus, lequel entre en prise dans le bord périphérique (76) pour entraîner en rotation le disque semeur (36).

2. Système de dosage selon la revendication 1, **caractérisé en ce que** le disque semeur (36) comporte une pluralité de dents, agencées sur le bord périphérique (76), et le système d'entraînement latéral comporte une roue d'entraînement (34) avec une pluralité de dents (78), les dents (78) de la roue dentée et les dents du disque semeur (36) engrenant les unes avec les autres.

3. Système de dosage selon la revendication 2, **caractérisé en ce que** les dents du disque semeur (36) et les dents (78) du système d'entraînement latéral sont des dents de roues droites.

4. Système de dosage selon la revendication 2 ou 3, **caractérisé en ce que** le système d'entraînement latéral comporte un arbre d'entraînement (82), qui est positionné concentriquement à la roue d'entraînement du système d'entraînement latéral.

5. Système de dosage selon la revendication 4, **caractérisé en ce que** l'arbre d'entraînement (82) peut être actionné par voie mécanique ou hydraulique ou pneumatique ou électrique.

6. Système de dosage selon l'une quelconque des revendications 1 à 5, **caractérisé en ce que** le système d'entraînement latéral comporte un entraînement à roue dentée ou un entraînement par friction.

7. Système de dosage selon l'une quelconque des revendications 1 à 6, **caractérisé en ce que** le système d'entraînement latéral est positionné dans une zone supérieure du disque semeur (36).

8. Système de dosage selon l'une quelconque des revendications 1 à 7, **caractérisé en ce qu'**un boîtier (70) est inclus, lequel comporte une ouverture (72), à travers laquelle passe le système d'entraînement latéral pour entrer en prise avec le bord périphérique (76) du disque semeur (36).

9. Semoir, comportant au moins un système de dosage (28) et au moyen un système de distribution (30) pour les semences, ledit au moins un système de distribution (30) étant relié à un système de dosage (28) correspondant, **caractérisé en ce que** le système de dosage est réalisé selon l'une quelconque des revendications 1 à 8.

10. Semoir selon la revendication 9, **caractérisé en ce que** le semoir (10) comporte plusieurs unités de semis en rangs (12), chaque unité de semis en rangs (12) étant réalisée avec ledit au moins un système de dosage (28) et ledit au moins un système de distribution (30) pour les semences.
